Europäisches Patentamt

**European Patent Office**

**Office européen des brevets**

(19)

(11) Publication number: **0 104 749**
**A1**

## EUROPEAN PATENT APPLICATION

(21) Application number: **83304795.4**

(22) Date of filing: **18.08.83**

(51) Int. Cl.³: **H 05 B 3/60**
**F 27 D 11/04, C 10 J 3/18**
**B 01 J 19/08**

(30) Priority: **27.08.82 ZA 826295**
**03.11.82 ZA 828056**
**28.06.83 ZA 834727**

(43) Date of publication of application:
**04.04.84 Bulletin 84/14**

(84) Designated Contracting States:
**AT BE CH DE FR GB IT LI LU NL SE**

(71) Applicant: **ACTIVATED CARBON SERVICES LIMITED**
**Oak Walk**
**St. Peter Jersey Channel Islands(GB)**

(72) Inventor: **Rintoul, John Charles**
**P.O. Box 68000**
**ZA-2021 Bryanston(ZA)**

(74) Representative: **Abnett, Richard Charles et al,**
**REDDIE & GROSE 16 Theobalds Road**
**London WC1X 8PL(GB)**

(54) A heating apparatus for heating solid, particulate material.

(57) Apparatus for heating gaseous, liquid or solid particulate materials includes three non-conductive tubular columns (12) for containing material to be heated, and electrodes (18, 24) associated with the columns such that each column receives one phase of a three-phase electrical a.c. supply to cause heating of the material in the column by conduction therethrough. Preferably a hopper arrangement below the columns forms one common electrode for the three columns. The apparatus can be used for activating or reactivating carbonaceous material or for many other purposes.

FIG 1

A HEATING APPARATUS FOR HEATING SOLID, PARTICULATE MATERIAL.

THIS INVENTION relates to a method of heating gaseous, liquid and particulate solid materials and to an apparatus for heating such materials.

Within this specification by a particulate solid material is meant a material in particle, granule or element form having a maximum dimension not exceeding 100 mm.

According to the invention there is provided an apparatus for heating particulate solid materials having a suitable electrical conductivity, which includes

at least three heating columns within which the particulate solid material to be heated can be contained; and

three pairs of electrode defining means, one pair being located with respect to each column respectively and a first electrode defining means of each pair being connectable to one phase of a three-phase supply, the electrode defining means of each pair being spaced from one another and connected to the other pairs to permit current flow through material to be heated when contained in the columns.

The second electrode defining means may include a common electrode defining means to effectively provide for a common electrode to oppose the first electrode defining means of each pair.

In one configuration, the common electrode defining means may be a conductive member forming a part of each column and opposing the first electrode defining means to serve as an electrode directly.

Alternatively, and with the columns electrically insulated from one another, the apparatus may include a container formation, forming the common electrode defining means, which is in communication with all three the columns and within which an electrically conductive material can be contained which is in electrical contact with material to be heated in the columns to serve as a common electrode opposing the first electrode defining means of each pair. For this configuration the columns, in their operative configuration, may be vertically disposed and the common container formation may be disposed beneath the columns. The common container formation may be adapted to contain the particulate solid material to be heated, the columns directly terminating in this region. Also, the common container formation may define a common hopper having an outlet from which heated material can be discharged.

In still an alternative configuration, with the columns being electrically insulated from one another, the common electrode defining means may include conductors connecting together conductive operative lower regions of the columns to form a continuous common electrode opposing the first electrode deining means of each pair.

Still further, and with the columns electrically insulated from one another, the common electrode defining means may be a conductive member secured with respect to each column in a position opposing the first electrode defining means of each pair being adapted to serve as an electrode in itself. For this configuration, the conductive member may be a screen positioned immediately beneath the columns being adapted and positioned to prevent the passage of particulate solid material through the columns during heating, while being displaceable to permit the release of material from the columns after heating, the passage of gas or liquid through the columns not being inhibited by the screen.

The apparatus of the invention may generally include a discharge hopper to receive heated material from the columns therein, the hopper including a discharge means for the discharge of such materials therefrom.

The columns above-defined as being electrically insulated from one another, may be of an electrically insulating material.

The columns may further be defined by separate members, or, alternatively, may define common walls.

The first electrode defining means may be electrodes of any conventional kind adapted to contact material to be heated when contained in the columns.  Conveniently they may be shaped, dimensioned and positioned to co-operate with the second electrode defining means to permit the required current flow.

In order to enhance efficiency of operation, the columns may be thermally insulated.

Further, according to the invention, the apparatus may include control means for controlling heating of the particulate solid material.  The control means may be adapted to control the magnitude of the voltage difference across the pairs of electrode defining means.  Alternatively, the control means may be adapted to control the effective spacing between pairs of electrodes across which a voltage can be applied for heating purposes.

Still further, the apparatus may include passage defining means for a gas or liquid to pass through, the passage defining means incorporating at least one of the columns.

The passage defining means may incorporate all three the columns in series or, alternatively, in parallel.

In addition, the apparatus may include flow control valves for controlling the passage of a gas or liquid through the passage defining means as well as a pressurising means to permit pressurisation of a gas or liquid within the passage defining means.

Conveniently, a venting system may be provided for the removal of vapours and gases, emitted by materials being heated, from the apparatus. Also, in order to enhance the conductivity of materials in the columns, a vibration means may be provided for vibrating the columns to thereby effect compacting of materials to be heated within the columns. Still further, in order to enhance the conductivity of materials to be heated, the apparatus may include pre-heating means for pre-heating the materials, either within or outside the columns.

The apparatus may also include means to introduce gases or liquids into the columns as well as pre-heating means for pre-heating gases or liquids to be introduced into the columns.

For particular applications, the apparatus may include more than one pair of electrode defining means per column being disposed to permit heating of materials, contained in different defined zones, along the length of the columns by permitting current flow between selected pairs of electrode defining means.

The columns, of an apparatus, in accordance with the invention, may be of a refractory material and the cross-sectional and length dimensions of the columns may be determined by the required capacity of the apparatus for particular applications.

The invention also extends to a method of heating gaseous liquid and/or particulate solid materials, which includes
applying a potential difference utilising a three phase supply between three pairs of electrodes defined within three columns within which a particulate solid heating material is contained having a suitable conductivity to cause heating thereof; and
heating the gaseous, liquid and/or solid material to be heated by bringing it into contact with the heating material.

The method, insofar as it applies to heating gaseous and/or liquid materials, may include passing the gaseous and/or liquid materials to be heated through the columns, thus causing it to pass through the heating material to be heated thereby.

Insofar as it applies to heating particulate solid materials, the method may include mixing the solid materials to be heated with the heating material prior to applying the potential difference, thus causing heating thereof due to heating of the heating material when the potential difference is applied.

Generally, the method of the invention may, include compacting the heating material in the columns. Furthermore, the method may include controlling the heating of the material to be heated by controlling the magnitude of the potential difference applied and thus the degree of heating of the heating material.

Still further, according to the invention there is provided a method of heating a particulate solid material which is suitably electrically conductive, which includes applying a potential difference utilising a three-phase voltage supply .between three pairs of electrodes defined within three columns within which the material is contained to thereby cause heating thereof.

If the particulate solid material is only suitably conductive when heated, the method may include pre-heating the material, either within the columns or elsewhere.

When it is required to heat particulate solid material which, is a carbonaceous material for the activation or re-activation thereof, the method of the invention may include feeding steam through the columns during heating to enhance the required activation or re-activation of the carbonaceous material.

The method of the invention may also include holding heated material at a required temperature for a required time period to permit complete removal of volatiles or absorbed materials to occur or for carbonisation of absorbed organisms to occur.

The invention thus also extends to a method of activating or re-activating a carbonaceous material which includes heating the material in accordance with the method of heating a particulate solid material in accordance with the present invention.

The apparatus and method above-defined can be utilised for various different applications, the apparatus and method being adaptable for such applications. Different types of particulate solid materials can be heated, provided that they have a suitable conductivity, can be pre-heated to attain such a conductivity or, alternatively, are mixed with a suitable material. Also, various gases or liquids being non-conductive can also be heated by an apparatus in accordance with the invention.

The invention, thus also extends to an apparatus which is particularly adapted for use in a method of heating gaseous liquid and/or particulate solid materials, in accordance with the method hereinabove defined, which apparatus may be an apparatus in accordance with the present invention.

Still further, the invention extends to a method of heating gaseous, liquid and/or particulate solid materials which includes the use of an apparatus in accordance with the present invention.

The invention is now described, by way of examples, with reference to the accompanying diagrammatic drawings, in which:

Figure 1 shows a schematic cross-sectional view of a first embodiment of an apparatus for heating particulate solid materials, in accordance with the invention.

Figure 2 shows a schematic cross-sectional view of a second embodiment of an apparatus for heating particulate solid materials, in accordance with the invention;

Figures 3 to 6 show schematically alternative configurations of a part of the apparatus of Figures 1 or 2; and

Figure 7 shows a schematic cross-sectional view of a third embodiment of an apparatus for heating particulate solid materials, in accordance with the invention.

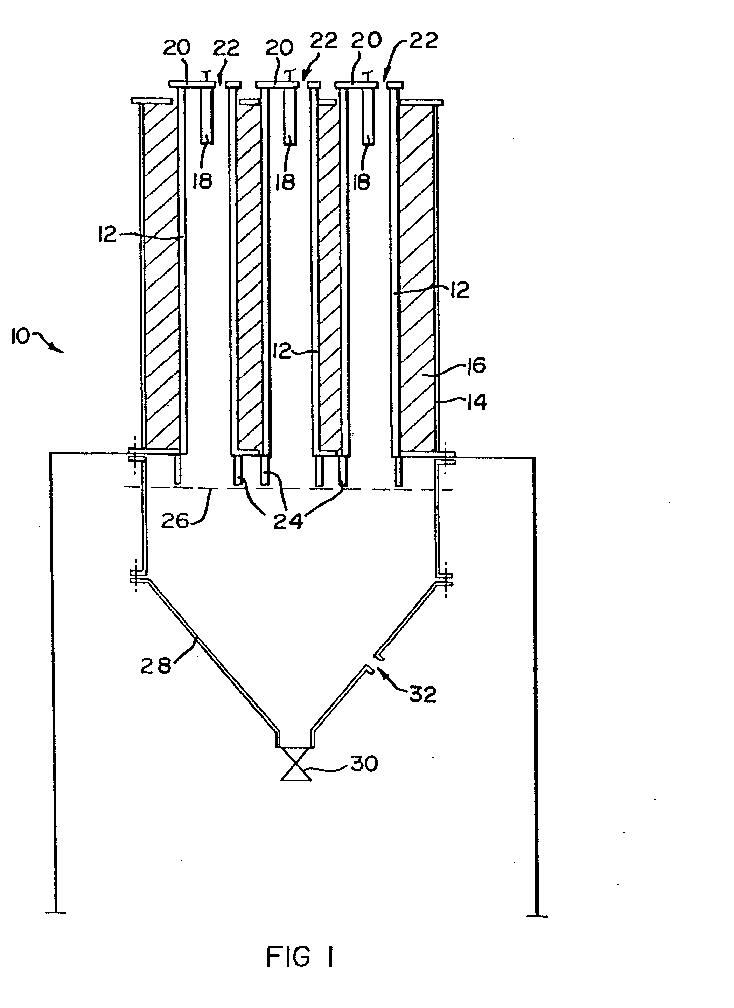

Referring initially to Figure 1 of the drawings an apparatus for heating particulate solid materials, in accordance with the invention, is generally indicated by the reference numeral 10. The apparatus 10 includes three elongate tubular columns 12 located within a housing comprising a heat insulating material 16 which is disposed within an outer shell 14. Each column 12 is of a refractory material which cannot conduct an electric current.

At the top of each column 12 there is provided a first electrode 18, the electrodes 18 being located in position via a support plate 20 which holds these electrodes 18 in position and which define apertures 22 therein through which a particulate

0104749

material can be charged into the columns 12.

At the lower end of each column 12 there are defined opposing electrodes 24 to the electrodes 18, these opposing electrodes being defined by a single common element defining a floating electrode or contact point.

The three electrodes 18 are each connectable to one phase of a three-phase voltage supply, in a conventional manner, by means of suitable connecting means, thus providing for the creation of a potential difference between each pair of electrodes.

Immediately beneath the electrodes 24 there is provided a stainless steel screen 26 which effectively closes off the lower ends of the columns 12, the screen 26 being made up of two flaps which are suitably hingeable (not shown in detail) so that they can be displaced into a discharge position in which particulate materials can be discharged from the columns 12. A hopper 28 is mounted onto the shell 14 beneath the columns 12 and is adapted to receive materials from the columns 12.

In use, for heating a particulate solid material, the material is charged into the columns 12 via the apertures 22 until the complete columns are filled therewith and the material is in contact with both electrodes 18 and 24. Such a material to be heated must either in itself be suitably electrically conductive or else must be rendered effectively conductive by mixing the particulate material with a secondary particulate material which is electrically conductive. Once the columns 12 are filled in the manner above-described, a potential difference can be created across each pair of electrodes, associated with each column 12 respectively, this potential difference causing a current to flow via the conductive particulate material from each electrode 18 to the common electrode 24 which forms a floating neutral point. As a result of the resistance of the particulate material being conductive to current flow, the particulate material will be heated, the temperature reached by the particulate material being determined by the potential difference created, the resulting current flow and the inherent electrical resistance of the material. As the conductive material heats up any non-conductive material mixed therewith will clearly also be heated. Once the heated material has reached a particular temperature or has been kept at a particular temperature for a predetermined time, the potential difference applied can be switched off and by suitably operating the flaps of the screen 26, the heated material can be discharged into the hopper 28.

Heat obtained from the apparatus, either via the heated materials, hot gases, or the like can further be utilised for auxiliary purposes, such as pre-heating or heating of other materials. Alternatively, such heat can be utilised for pre-heating materials to be heated by the apparatus, which may also provide for de-watering and drying of such materials before it enters the apparatus, thus ensuring proper operation thereof.

In order to ensure the efficiency of the apparatus 10, it must be ensured that any material charged into the columns 12 is in a dry state. Any liquid, and particularly water, which may be associated with such a material may clearly modify the current flow through the actual particulate material in which case heating efficiency will be reduced. In particular, water being far less conductive than carbon in fact reduces current flow and thus inhibits heating.

For applications in which material heated must react with particular gases, air steam, or the like, the hopper 28 may be particularly adapted to permit the introduction of such gases, air, steam, or the like via a suitably controllable inlet 32, such gases being transmitted to the materials in the columns via the screen 26. A suitable valve mechanism 30 is also provided whereby materials can be discharged from the hopper.

The conductivity of a material to be heated is clearly determined by the inherent properties of the particular material and if it requires to be adjusted or if it is not conductive at all, the material can, as mentioned above, be mixed with a secondary material which is in fact conductive and which will ensure the flow of current between the electrodes 18 and 24, causing heating of the secondary material and thus the required material mixed therewith. The length and cross-sectional dimensions of the columns further effect the heating qualities of the apparatus 10, and the apparatus may thus be designed to comply with particular requirements.

Heat obtained from the apparatus, either via the heated materials, hot gases, or the like can further be utilised for auxiliary purposes, such as pre-heating or heating of other materials. Alternatively, such heat can be utilised for pre-heating materials to be heated by the apparatus, which may also provide for de-watering and drying of such materials before it enters the apparatus, thus ensuring proper operation thereof. Pre-heating of materials to be heated may also enhance the conductivity of such materials.

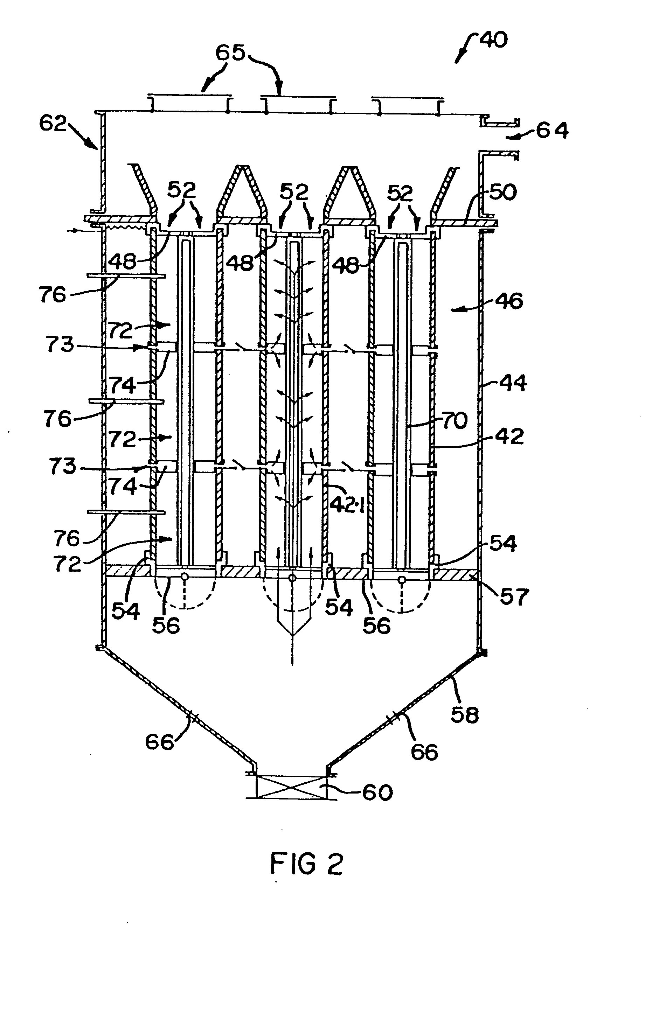

Referring now to Figure 2 of the drawings, there is shown a second embodiment of an apparatus for heating particulate solid materials, this second embodiment essentially being a modification of the apparatus 10. This modified apparatus is generally indicated by the numeral 40 and includes three elongate tubular columns 42 located within a housing 44, spaces 46 between the housing and the tubular columns 42 being filled with a heat insulating material (not shown). Each column 42 is again of a refractory material which cannot conduct an electric current.

At the top end of each column 12 there is provided a first electrode 48, the electrodes 48 being located in position via a non-conductive support plate 50, the plate 50 and electrodes 48 defining apertures 52 therethrough through which a particulate material can be charged into the columns 42.

At the lower end of each column 42 there is provided an opposing electrode 54, the opposing electrodes 54 being defined by a single common electrode or contact point, formed in the manner hereinafter described.

The electrodes 48 and 54 therefore effectively define pairs of electrodes at opposing ends of the columns 42, the electrodes 48 each being connectable to one phase of a three-phase voltage supply, in a conventional manner, by means of a suitable connecting means, thus providing for the creation of a potential difference between the pairs of electrodes. The electrodes 54 therefore effectively define a common point providing for a conventional three-phase star-connection or floating neutral point, as do the electrodes 18 and 24 described with reference to Figure 1.

Immediately beneath each electrode 54 there is provided a stainless steel mesh screen 56 which effectively connects together the electrodes 54 to provide the common point and which further closes off the lower ends of the columns 42. The screen 56 is made up of flaps which are suitably hingeable beneath each column 12 (see dotted lines), being supported by a conductive support frame 57, so that they can be displaced into a discharge position in which particulate materials can be discharged from the columns 42. A hopper 58 is secured to the housing 44 beneath the columns 42 and is adapted to receive particulate materials from the columns 42. An outlet valve 60 is provided at the lowest ends of the hopper 58 through which particulate materials can be discharged from the hopper.

It will be appreciated that rather than to utilise the electrodes 24 (Figure 1) or 54 (Figure 2), the mesh screens 26, 56 can be utilised as the common electrode.

In use, for heating, for example, a cabonaceous particulate material, the material is charged into the column 42 via the apertures 52, until the complete columns are filled therewith and the material is in contact with the opposing electrodes 48 and 54. It is ensured that a sufficient portion of the carbonaceous material includes activated carbon or another conductive material so that the combined material is sufficiently conductive to permit an electric current flow between the electrodes 48 and 54. Also to ensure sufficient current flow, the material may be compacted within the columns 12. Such compaction may be provided by means of a vibrating mechanism (not shown) whereby particulate materials within the columns can be evenly compacted therein.

When the columns 42 have been filled in the manner above-described, a potential difference can be applied across the pairs of electrodes, this potential difference causing a current to flow via the carbonaceous material from each electrode 48 to the floating electrode 54. As a result of the resistivity of the conductive particulate material to current flow, this material will be heated, the temperature so reached being determined by the potential difference created across the electrodes and thus the current flow through the material. If mixed with non-conductive material, this will clearly also be heated via its contact with the heated material. The effective heating of the carbonaceous material is also a function of the dimensions of the tubular columns 42 and the columns 42 are therefore particularly dimensioned to provide for a suitable current flow to provide the required heating of the materials within the columns.

Once the heated material has reached a particular temperature or has been kept at a particular temperature for a predetermined time, during which suitable reactions may have been initiated and completed, the potential difference applied can be switched off and by suitably operating the flaps of the screen 56 can be discharged into the hopper 58. From the hopper 58 the processed material can be discharged via the outlet valve 60.

In particular for the activation or re-activation of carbon, a carbonaceous material including sufficient activated carbon to permit current flow through the columns 42, is charged into the columns 12. The material may then be compacted as above-described ensuring also proper contact with the electrodes 48 and 54.

A potential difference is then applied across the electrodes 48 and 54 causing a current flow through the material and thus heating thereof. For activation or re-activation it is required that the material be heated to a temperature of $850^{\circ}C$ to $900^{\circ}C$. For activation as such, pre-heating to $700^{\circ}C$ may be required to obtain the required conductivity of the material.

The material is then held at between 850°C and 900°C until all volatile gases have been removed, suitable extraction means 62 (not shown in detail) being provided above the columns 12 to permit the release of volatiles via an outlet opening 64. The top end of the extraction means 62 includes suitable manholes 65 to provide access to the columns for the charging thereof. During such removal of volatiles it is important that the atmosphere is kept inert with steam vapour, carbon di-oxide or nitrogen. In order to permit the flow of any one of the above-mentioned gases or steam through the columns, the hopper 58 defines inlet valves 66 through which the required gases or steam can be fed into the hopper, the hopper defining an effectively enclosed chamber which can be pressurised so that such gases or steam is forced via the mesh screens 56 through the columns 42.

For certain applications, the activation or reactivation of carbonaceous materials may be completed at this stage. However, for other applications such as where carbonisable organisms have been absorbed by the carbon, the material must now be carefully oxidised in a water gas reaction using steam. Steam can thus be introduced in the same manner as above-described to provide for the required reaction. With the steam heated to a suitable temperature, the temperature of the carbon mass in the columns will clearly not be affected. Once this reaction has been completed activation or reactivation has thus been completed and the activated material can be discharged from the columns as above-described.

Also, for materials that have not yet been carbonised
it may be required that the above temperature be retained until
carbonising of a material has been completed whereafter activation can occur.   For example, it is possible to mix carbonisable material such as hard wood, coal, peach pips, coconut
shell, or the like in small chip form with activated carbon, or
another suitably conductive material, causing the heating thereof
and resulting driving off of volatiles and then the subsequent
carbonising thereof.   After carbonising, activation can then
occur by the reaction with steam as is hereinabove described.   By
mixing the carbonisable material with a suitably conductive recoverable material which is re-usable further cost advantages can
clearly be attained.

To provide for the accurate and consistent activation
of carbonaceous materials within the columns, it is important
that the material is retained at the required temperature for the
required time.   Since steam or gases that are introduced into the
columns via the hopper 58 may be at lower temperatures than the
temperature of the material within the columns, cooling of this
material may occur resulting in an unsatisfactory reaction.   To
overcome this problem, pre-heating of the gases or steam may be
provided for or, alternatively, a suitable sparger 70 may be
mounted within the columns 42 projecting along the length of
these columns, the sparger 70 being adapted to introduce steam or
gases into the material within the columns at any points along
the length thereof.   As such, the effect of the steam or gases on the material, particularly in the lower regions of the columns,
will be decreased and it can thus be ensured that the temperature
throughout the columns of the material remains effectively constant. Further uses of the sparger 70 are also defined hereinafter.

Still further, each column may be divided into separate
zones 72, by means of ring-like dividing elements 73, the elements 73 defining radially extending arms 74 which can act to
support the sparger 70. Steam or gases can also be introduced
via the arms 74 into materials within the different zones of the
columns (see column 12.1 in the drawing). Furthermore the arms
74 may also serve as electrodes so that current can be conducted
through separate zones of the columns. As such, the temperature
within the different zones can be independently raised to overcome lower resistance at lower temperatures as previously described. Also, if the moisture content of the carbon is higher
than expected, power can initially be fed between two elecrodes
defined along a column instead of merely from the top electrode
48 to the bottom electrode 54 to thereby reduce the resistance
and increase the potential current flow more expeditiously than
would otherwise be possible.

It will be appreciated that temperature control during
activation or re-activation is essential and that such control
can be attained in various different ways using different configurations of the apparatus or different control means, such
control means always being adapted to provide for materials within the columns to be retained between particular temperature limits during activation or reactivation thereof.

The Applicant believes that the above mode of heating carbonaceous materials for activation thereof will prove relatively cheap as compared with conventional methods. It is also believed that suitable control mechanisms can be provided for the apparatus ·to ensure the effective and consistent activation of carbons. The complete design of the apparatus may be determined by the particular materials to be heated and it will be appreciated that it can be utilised for other applications rather than for the activation or reactivation of carbons. Any other such applications is not described in detail herein.

Any heat obtained from the above apparatus 40 can again be utilised for auxiliary purposes such as for pre-heating of materials, or the like.

Referring again to the heating of materials which only become suitably conductive for heating by means· of the apparatus 40 at already elevated temperatures, pre-heating of such materials may be required if not mixed with a suitably conductive material. For pre-heating, the sparger 70, being in the form of a tube can act as a separate heating column which can be filled with a suitably conductive material which can be heated in the manner above-described and from which heat can radiate to preheat material in the actual columns 42. The electrodes 48, 54 can be suitably adapted for this purpose or additional electrodes can be provided.  Alternatively, the sparger 70 may have a heating rod or coil located thereon or with respect thereto whereby heat for pre-heating by radiation can be provided.  Other pre-heating arrangements within or outside the columns can clearly also be envisaged.  Use of the sparger 70 for pre-heating is not shown clearly in the drawings but an additional benefit if provided for is that steam entering columns 42 via the sparger can also be suitably pre-heated.

A typical situation where pre-heating may be useful is for activating completely unactivated carbon char, or the like, which at normal temperatures is non-conductive but by heating above $700^{o}C$ becomes progressively more conductive at which stage the apparatus 90 can in fact be used for activation thereof.  Pre-heating to attain conductivity can take place in the manner above-described or in any other way using a non-oxidising flame, or the like.

In one alternative embodiment of the apparatus antici-pated by the Applicant, banks of columns may be connected to one another, each bank being connected to one phase of a three-phase voltage supply.  Once again separate controls may be provided and, furthermore, it is anticipated that an automatic control programme can be formulated to control the activation of carbon throughout an entire apparatus.

The apparatus 10, 40 were both described, in use, for particular applications and it must be understood that they can be used for various different applications where it is required to heat particulate solid materials. The specific construction of the apparatus can also be significantly variable, and particularly the second common electrode of the respective pairs of electrodes can be alternatively provided for, usually depending on the construction of the columns.

In one configuration of a common electrode, anticipated by the Applicant, the conductive material being heated can in itself be utilised as a common electrode. For such a configuration, the columns for containing the material to be heated can all terminate in a common hopper, also containing the material to be heated and being in direct contact with the material in the columns. The hopper thus effectively provides an electrode defining means and material to be contained therein the actual electrode.

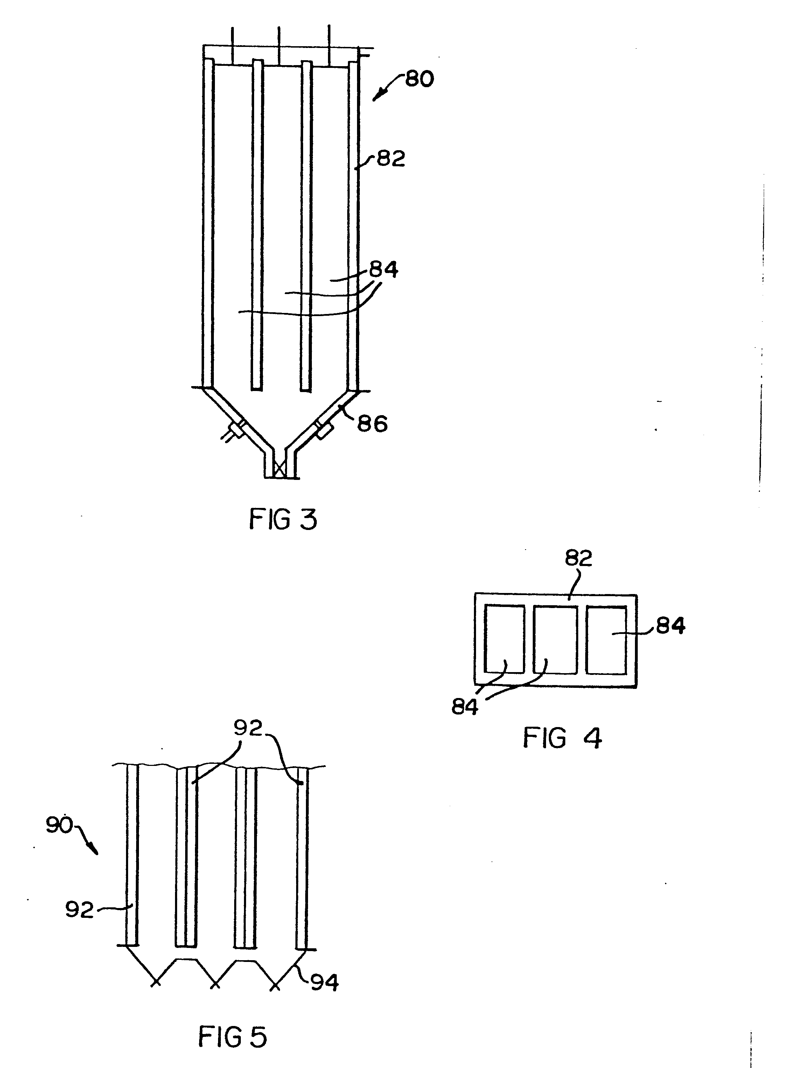

Figures 3 and 4 shows a schematic side view and a cross-sectional end view of such an apparatus, where the material to be heated also defines the common electrode, this apparatus 80 comprising a single body 82 defining three columns terminating in a hopper 86 within which material contained can be in direct contact with material in the columns 84. The cross-sectional areas defined by each column preferably be equal.

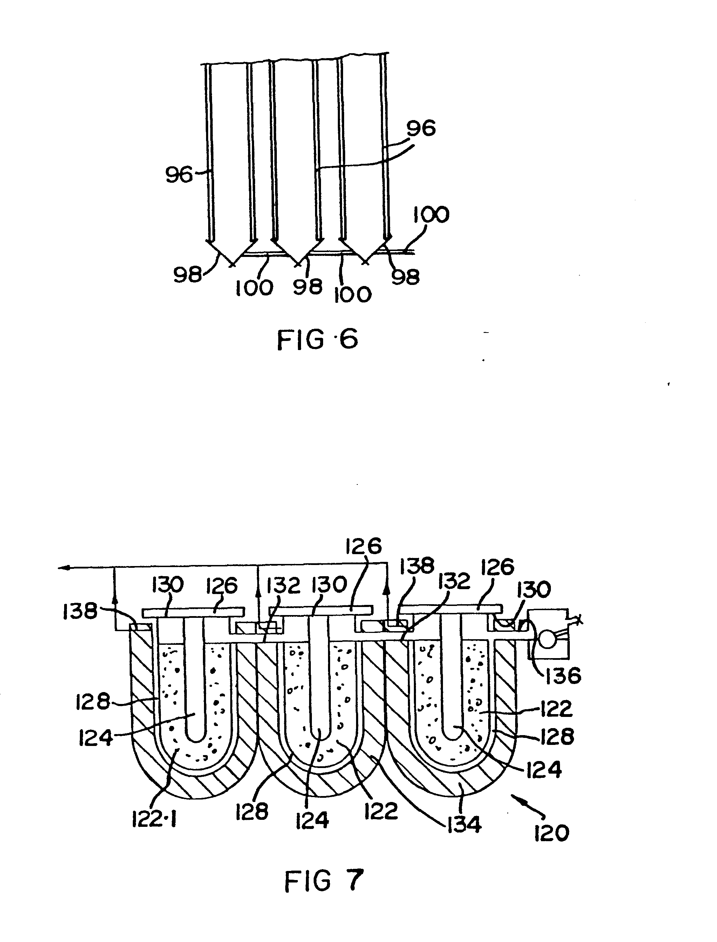

Figure 5 shows a configuration of an apparatus 90 having three separate columns 92, which terminate in a common hopper 94 which is in effect equivalent to the hopper 86 described above. In Figure 6, the configuration is in effect equivalent to that of Figure 5, except that the columns 96 shown therein have separate hoppers 98 which are connected by conductors 100, thus serving as the required common electrode.

The use of the apparatus as shown in Figures 3 to 6 are as described for the apparatus 10,40 and is thus not repeated herein.

All the apparatus described above are particularly adapted for heating particulate solid material in batches, either directly, or when non-conductive, indirectly utilising a conductive material or pre-heating the material until suitably conductive. However, by utilising a conductive material as described liquids or gases, being non-conductive, or even conductive but less so than the particulate solid material, can also be heated.

An apparatus, in accordance with the invention, and particularly adapted for this purpose, is shown in Figure 7 and is generally indicated by the numeral 120. The apparatus 120 again includes three columns 122, each column having an electrode 124, connectable to one phase of a three-phase supply, projecting therein as shown. The electrodes 124 are located via a support plate 126 and are insulated from the column walls 128 by means of plates 130 of an insulating material. The column walls 128 are conductive and are electrically connected to one another via conduits 132, the conduits 132 providing communication between the columns 122 for reasons hereinafter described.

Being connected to one another and opposing the electrodes 124, the walls 128 form a common electrode opposing each of the electrodes 124, permitting current flow from the electrodes 124 to the walls when a suitably conductive particulate solid material is contained within the columns. The walls 128 forming the columns 122 are further encapsulated in a thermal and electrically insulating material 134 as shown.

The columns 122 are in communication with one another via the conduits 132 as described above and by providing a liquid inlet 136 and steam outlets 138 the apparatus can typically serve as a boiler by passing water through the effective passage defined from the inlet to the remote column 122.1 via the preceding columns 122 and conduits 132. The particulate material in the columns can clearly be heated by applying a potential difference between he electrodes 124 and walls 128 respectively and this heated material can heat and evaporate water passing therethrough Steam so created can then be expelled via the outlets 138, which include suitable valves for this purpose. By allowing for pressurisation within the columns, superheated steam can also be provided and the heating of gases as such can clearly also be effected by passing such gases through the apparatus 120. Suitable control can be effected in various different manners using control and measing equipment.

Once again the dimensions of the columns can determine the heating capacity of the apparatus, this capacity in turn determining the possible applications thereof. Since the particulate material contained in the columns effectively defines an extensive surface area, efficiency can be high and the cost of heating liquids or gases can accordingly be relatively low. The close proximity of the pairs of electrodes in the apparatus 120 also enhances its use and application.

The use of three phase alternating current provides the advantage of balancing the current drawn from a conventional electricity power supply utility. Furthermore, it means that connection to one end or point on each column only is necessary, as the other terminal for each column is formed by a common element forming the centre or common point of a three phase star connection. That is to say in Figure 1 it is not necessary to lead in a supply cable to the bottom end of each column 12, instead they are connected to each other by the electrodes 24. This makes the unit inherently safer as it removes the need for an electrical supply at a point where water can be present, and makes it possible totally to encapsulate the unit with considerable savings in heat loss even though the columns can be run at very high temperatures.

In Figure 7 the particulate material provides the necessary conduction which generates heat which is then transferred to the non-conductive fluid flowing through the apparatus. The unit can again be well sealed and can be operated at high pressures,and is suitable for heating corrosive gases for example.

The unit lends itself to a relatively compact construction, again making it easier to retain heat and inherently leading to a safer form of apparatus.

Generally, the Applicant believes that utilising resistive heating of particulate solid materials as above described in conjunction with a three-phase supply can provide for effective and cheap heating of gases, liquids and/or other particulate solid materials which are non-conductive. The method and apparatus is also safe although an earth leakage can be provided for if necessary. The possible uses of apparatus 10, 40, 120 also appear to be vast.

0104749

- 28 -

CLAIMS:

1. An apparatus for heating particulate solid materials having a suitable electrical conductivity, characterised by:

at least three heating columns within which the particulate solid material to be heated can be contained; and

three pairs of electrode defining means, one pair being located with respect to each column respectively, and one electrode defining means of each pair being connectable to one phase of a three-phase supply, the other electrode defining means being connected together to permit current flow through material to be heated when contained in the columns.

2. An apparatus as claimed in claim 1, characterised in that the columns are electrically insulated from one another and the apparatus includes a common container formation constituting the said other electrode defining means.

3. An apparatus as claimed in claim 2, characterised in that the common container formation is a screen positioned immediately beneath the columns and adapted and positioned to prevent the passage of particulate solid material through the columns during heating, while being displaceable to permit the release of material from the columns after heating, the passage of gas or liquid through the columns not being inhibited by the screen.

4.	An apparatus as claimed in any of claims 1 to 3, characterised in that two or more of the columns define common walls.

5.	An apparatus as claimed in any of the preceding claims, characterised in that the columns are thermally insulated.

6.	An apparatus as claimed in any of the preceding claims, characterised by control means for controlling heating of the particulate solid material, the control means being adapted to control the effective spacing between pairs of electrodes across which a voltage can be applied for heating purposes.

7.	An apparatus as claimed in any of the preceding claims, characterised by passage defining means for a gas or liquid to pass through, the passage defining means incorporating at least one and preferably all three of the columns.

8.	An apparatus as claimed in claim 7, characterised by pressurising means to permit pressurisation of a gas or liquid within the passage defining means.

9.	An apparatus as claimed in any of the preceding claims, characterised by pre-heating means for pre-heating materials to be heated by the apparatus.

10.	An apparatus as claimed in any of the preceding claims, characterised by vibration means for vibrating the columns to thereby effect compacting of materials to be heated within the columns.

11. A method of heating a particulate solid material which is suitably electrically conductive, characterised by applying a potential difference utilising a three-phase voltage supply between three pairs of electrodes defined within three columns within which the material is contained to thereby cause heating thereof.

12. A method as claimed in claim 11, characterised in that the particulate solid material to be heated is a carbonaceous material for the activation or re-activation thereof and including feeding steam through the columns during heating to enhance the required activation or re-activation of the carbonaceous material.

13. A method of heating gaseous liquid and/or particulate solid materials, characterised by:
applying a potential difference utilising a three phase supply between three pairs of electrodes defined within three columns within which a particulate solid heating material is contained having a suitable conductivity to cause heating thereof; and
heating the gaseous, liquid and/or solid material to be heated by bringing it into contact with the heating material.

14. A method as claimed in claim 13, insofar as it applies to heating particulate solid materials, characterised by mixing the solid materials to be heated with the heating material prior to applying the potential difference, thus causing heating thereof due to heating of the heating material when the potential difference is applied.

15.      A method as claimed in claim 13 or 14, characterised by compacting the heating material in the columns.

FIG 1

0104749

FIG 2

3/4

0104749

80

82

84

86

FIG 3

82

84

84

FIG 4

92

90

92

94

FIG 5

FIG·6

FIG 7

| | DOCUMENTS CONSIDERED TO BE RELEVANT | | EP 83304795.4 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| Y,P | US - A - 4 369 351 (MASSEY et al.)<br>* Abstract; column 6, lines 21-45; fig. 3 *<br>-- | 1,11, 13 | H 05 B 3/60<br>F 27 D 11/04<br>C 10 J 3/18<br>B 01 J 19/08 |
| Y | GB - A - 1 317 637 (NUKEM)<br>* Page 1, line 11 - page 2, line 55; fig. 1,2 *<br>-- | 1,11, 13 | |
| A | DE - B - 1 052 009 (DEUTSCHE EDELSTAHLWERKE)<br>* Column 1, lines 1-15, lines 42-50; fig. 1 *<br>-- | 1,11, 13 | |
| A | DE - A1 - 2 634 616 (WESTINGHOUSE)<br>* Page 7, line 23 - page 8, line 7; claims 6,7; fig. 2 *<br>-- | 1,11, 13 | |
| A | US - A - 1 857 799 (F. WINKLER)<br>* Page 1, lines 1-28, 43-45; claims 1-3; fig. *<br>---- | 1,7 | |

**TECHNICAL FIELDS SEARCHED (Int. Cl. ³)**

H 05 B 3/00
F 27 D 11/00
C 10 J 3/00
B 01 J 8/00
B 01 J 10/00
B 01 J 14/00
B 01 J 19/00

The present search report has been drawn up for all claims

| Place of search | Date of completion of the search | Examiner |
|---|---|---|
| VIENNA | 05-12-1983 | TSILIDIS |